Europäisches Patentamt

European Patent Office

Office européen des brevets

(11) Publication number: **0 486 823 A2**

## EUROPEAN PATENT APPLICATION

(21) Application number: **91117909.1**

(22) Date of filing: **21.10.91**

(51) Int. Cl.5: **C08G 75/00**

(30) Priority: **22.10.90 US 600618**

(43) Date of publication of application:
**27.05.92 Bulletin 92/22**

(84) Designated Contracting States:
**AT BE CH DE DK ES FR GB GR IT LI LU NL SE**

(71) Applicant: **PHILLIPS PETROLEUM COMPANY**
**5th and Keeler**
**Bartlesville Oklahoma 74004(US)**

(72) Inventor: **Nesheiwat, Afif Michael**
**292-G Main Street**
**Madison, NJ 07940(US)**

(74) Representative: **Geissler, Bernhard, Dr. jur.,**
**Dipl.-Phys. Patent- und Rechtsanwälte et al**
**Bardehle-Pagenberg-Dost-**
**Altenburg-Frohwitter-Geissler & Partner**
**Postfach 86 06 20**
**W-8000 München 86(DE)**

(54) **Poly(arlene sulfide/sulfone) processing properties improvement method.**

(57) A method of improving the processing properties such as melt stability of poly(arylene sulfide/sulfone) is provided. The polymer is heated with a polar organic solvent, water and optionally, an alkali metal or alkaline earth metal carboxylate, to a temperature and for a time to dissolve the polymer whereupon the resulting solution is quenched with additional polar organic solvent, water and an alkali metal or alkaline earth metal carboxylate if not present in the original solution to cause a phase separation. The resultant mixture is cooled, and particulate poly-(arylene sulfide/sulfone) having improved processing properties is recovered.

EP 0 486 823 A2

## Background of the Invention

### 1. Field of the Invention

The present invention relates generally to a poly(arylene sulfide/sulfone) processing properties improvement method, and more particularly, to a method of improving processing properties such as melt flow stability, gas expulsion and color in conventionally produced poly(arylene sulfide/sulfone).

### 2. Description of the Prior Art

As a result of their outstanding chemical, heat and electrical insulation resistance as well as superior rigidity when compared to other thermoplastics, arylene sulfide polymers have found favor for forming reinforced plastic composites as well as for a variety of other applications.

One type of arylene sulfide polymer which is particularly suitable in applications involving high temperatures is poly(arylene sulfide/sulfone). Thermoplastic materials formed of poly(arylene sulfide/sulfone) have high heat resistance due to the high melting point of the polymer.

The term "poly(arylene sulfide/sulfone)" is used herein to broadly designate the arylene sulfide/sulfone polymers described in United States Patent No. 4,016,145 issued April 5, 1977, United States Patent No. 4,125,525 issued November 14, 1978 and United States Patent No. 4,127,713 issued November 28, 1978, which patents are incorporated herein by reference. The most commonly produced such poly(arylene sulfide/sulfone) is poly(phenylene sulfide/sulfone).

While the arylene sulfide/sulfone polymer production methods described in the above-referenced patents as well as other methods have been used successfully in the production of poly(arylene sulfide/sulfone), it has generally been difficult to produce poly(arylene sulfide/sulfone) having consistently good processing properties. The term "processing properties" is used herein to mean those properties which facilitate molding and enhance the resulting molded product such as melt flow stability, the rate of gas expulsion during molding, color, texture and the like. Quite often, poly(arylene sulfide/sulfone) is produced which has poor processing properties, particularly poor melt flow stability and high gas expulsion during extrusion and/or molding.

Thus, there is a need for a method of improving the processing properties of poly(arylene sulfide/sulfone) which, for whatever reason, is produced with poor processing properties.

## Summary of the Invention

The present invention meets the need recited above by providing a method of treating poly(arylene sulfide/sulfone) whereby the processing properties are improved. The method comprises heating a mixture of the poly(arylene sulfide/sulfone) to be treated with a polar organic solvent, water and optionally, an alkali metal or alkaline earth metal carboxylate, to a temperature and for a time period such that the poly(arylene sulfide/sulfone) is dissolved. The resulting solution is then quenched with additional polar organic solvent, water and an alkali metal or alkaline earth metal carboxylate if such a carboxylate is not included in the mixture which is heated, to cause a phase separation of the poly(arylene sulfide/sulfone). The resultant phase separated mixture is slowly cooled to solidify the poly(arylene sulfide/sulfone), and the solid poly(arylene sulfide/sulfone) produced having improved processing properties is recovered.

In a preferred method, the polar organic solvent is N-methylpyrrolidone and the alkali metal or alkaline earth metal carboxylate is calcium acetate. The initial mixture containing the poly(arylene sulfide/sulfone) is preferably heated to a temperature of about 200°C for a time period of about 1 hour. After the quenching step, the phase separated mixture is preferably cooled at a rate of about 2°C per minute to a temperature in the range of from about 200°C to about 30°C. The precipitated poly(arylene sulfide/sulfone) can be recovered by filtration followed by hot and cold water washes.

It is, therefore, a general object of the present invention to provide a method of improving the processing properties of poly(arylene sulfide/sulfone).

Other and further objects, features and advantages of the present invention will be readily apparent to those skilled in the art upon a reading of the description of preferred embodiments which follows.

## Description of Preferred Embodiments

As indicated above, methods of producing poly(arylene sulfide/sulfone) are known. In accordance with the production methods disclosed in U.S. Patent Nos. 4,016,145, 4,125,525 and 4,127,713 referred to above, the polymer is produced by contacting a polyhaloaromatic sulfone monomer and an alkali metal sulfide in a polar organic solvent under polymerization conditions to produce arylene sulfide/sulfone polymer, after which the polymer is recovered. It is known to recover the polymer from the reaction solution by precipitating it from the reaction solution with methanol.

A method for recovering granular poly(arylene sulfide/sulfone) from a polymerization mixture is described in United States Patent No. 4,415,729 issued November 15, 1983. That method involves combining a separation agent with the polymerization reaction mixture at a temperature above that at which the poly(arylene sulfide) is in molten phase to cause a phase separation of the poly(arylene sulfide). The temperature of the polymerization reaction mixture is then reduced to produce a slurry comprising particulate poly(arylene sulfide), and the particulate poly(arylene sulfide) is recovered from the slurry.

While such previously known methods and techniques for producing and recovering poly(arylene sulfide/sulfone) have been utilized successfully, the poly(arylene sulfide/sulfone) has often exhibited poor melt stability, severe gas expulsion when extruded or molded, dark color and other poor processing properties.

In accordance with the present invention, previously produced poly(arylene sulfide/sulfone), e.g., poly(phenylene sulfide/sulfone), which has poor processing properties is combined with a mixture of a polar organic solvent, water and optionally, an alkali metal or alkaline earth metal carboxylate. The mixture is heated to a temperature and for a time period such that the poly(arylene sulfide/sulfone) is dissolved. Generally, the mixture is heated to a temperature in the range of from about 150°C to about 250°C, preferably about 200°C, and is maintained at that temperature for a time period in the range of from about 5 minutes to about 3 hours, preferably about 1 hour. The mixture is preferably agitated, such as by stirring, while it is heated to facilitate the dissolution of the polymer.

Once the polymer is fully dissolved, the resulting solution is quenched with additional polar organic solvent, water and optionally, an alkali metal or alkaline earth metal carboxylate. The quenching step is preferably carried out by combining the quench solution with the heated mixture while vigorously agitating the mixture. Alkali metal or alkaline earth metal carboxylate must be included in either the heated mixture or in the quench solution. The most preferable technique is to include the alkali metal or alkaline earth metal carboxylate in the polymer mixture which is heated. The quenching of the polymer solution at the temperature to which it is heated causes a phase separation between the poly(arylene sulfide/sulfone) and the solvent. The resulting phase separated mixture is slowly cooled, preferably at a rate in the range of from about 1.0°C per minute to about 30°C per minute to a temperature in the range of from about 200°C to about 30°C whereby the poly(arylene sulfide/sulfone) is solidified in particle form. The particulate poly(arylene sulfide/sulfone) which is recovered has improved processing properties, particularly, good melt flow stability, low gas expulsion upon being extruded or molded and improved color.

The polar organic solvents useful in accordance with the present invention are solvents for both poly(arylene sulfide/sulfone) and for water which do not adversely affect the polymer when dissolved and precipitated therefrom. Examples of such polar organic solvents include amides, e.g., lactams, and sulfones. Specific examples of such polar organic solvents include hexamethylphosphoramide, tetramethylurea, N,N'-methylenedipyrrolidone, N-methyl-2-pyrrolidone, pyrrolidone, caprolactam, N-ethylcaprolactum, sulfolane, N,N'-dimethylacetamide, low molecular weight polyamides, and the like. The polar organic solvent presently preferred is N-methylpyrrolidone.

The alkali metal and alkaline earth metal carboxylates which can be employed can be represented by the formula $RCO_2M$ for the alkali metal carboxylates and $(RCO_2)_2M'$ for the alkaline earth metal carboxylates, wherein R is a hydrocarbon radical selected from alkyl, cycloalkyl and aryl, and combinations thereof such as alkaryl, aralkyl, and the like. The number of carbon atoms in R is generally within the range of 1 to 20, M is an alkali metal selected from lithium, sodium, potassium, rubidium and cesium and M' is an alkaline earth metal selected from calcium, strontium and barium. Examples of particularly suitable such alkali metal and alkaline earth metal carboxylates include lithium acetate, sodium acetate, potassium acetate, calcium acetate, lithium propionate, sodium propionate, lithium 2-methylpropionate, rubidium butyrate, and the like. Of these, sodium and calcium acetate are preferred with calcium acetate being the most preferred.

The amounts of polar organic solvent, water, and alkali metal or alkaline earth metal carboxylate, if any, utilized in the mixture containing poly(arylene sulfide/sulfone) which is heated depends on the amount of polymer in the mixture. Generally, the polar organic solvent is present in an amount which results in a ratio of the moles of polar organic solvent to the moles of polymer repeating units present, i.e., the number of arylene sulfide/sulfone repeating units, in the range of from about 25 to about 2. The water is present in an amount resulting in a ratio of the moles of water to the number of polymer arylene sulfide/sulfone repeating units in the range of from about 10 to about 1, and the alkali metal or alkaline earth metal carboxylate, if used in the heated mixture, is present in an amount resulting in a ratio of the moles of alkali metal or alkaline earth metal carboxylate to the number of polymer arylene sulfide/sulfone repeating units in the range of from about 0.10 to about 5.0. Most preferably, the polar organic solvent is N-methylpyrrolidone present in a ratio of moles of N-methylpyrrolidone to the number of polymer repeating units of about 10, the water is present in a ratio of moles of water to the number of polymer repeating units of about 10 and the alkali metal or alkaline earth metal carboxylate, if present, is calcium acetate present in a ratio of moles of calcium acetate to the number of polymer repeating units of about 1.0.

The quench solution of additional polar organic solvent, water, and optionally, alkali metal or alkaline earth metal carboxylate, generally contains an amount of polar organic solvent such that the ratio of the moles of additional polar organic solvent to the number of polymer arylene sulfide/sulfone repeating units in the quenched mixture is in the range of from about 0.10 to about 10. The ratio of the moles of additional water to the number of polymer arylene sulfide/sulfone repeating units is in the range of from about 1 to about 40, and the ratio of the moles of alkali metal or alkaline earth metal carboxylate, if present, to the number of polymer arylene sulfide/sulfone repeating units is in the range of from about 0.00 to about 5.0. Preferably, the polar organic solvent in the quench solution is N-methylpyrrolidone present therein in a ratio of moles to polymer repeating units of about 5, the water is present in a ratio of moles to polymer repeating units of about 10 and the alkali metal or alkaline earth metal carboxylate, if present, is calcium acetate present in a ratio of moles to polymer repeating units of about 1.0.

The particulate poly(arylene sulfide/sulfone) having improved processing properties produced can be recovered from the polar organic solvent, water and alkali metal carboxylate by any suitable method including filtration, centrifugation or the like. The recovered polymer is then preferably hot water washed followed by at least one cold water wash.

The method of the present invention is particularly suitable for improving the melt flow stability, the amount of gas expulsion and the color or poly(phenylene sulfide/sulfone) produced by known methods. In a particularly preferred embodiment of the present invention, a mixture of poly(phenylene sulfide/sulfone) with N-methylpyrrolidone, water and calcium acetate is heated to a temperature of about 200°C for a time period of about 1 hour whereby the poly(phenylene sulfide/sulfone) is dissolved. The amounts of the components in the heated mixture are such that the ratio of the moles of N-methylpyrrolidone to the number of polymer repeating units is about 10, the ratio of the moles of water to the number of polymer repeating units is about 10 and the ratio of the moles calcium acetate to the number of polymer repeating units is about 1.0.

The resulting polymer solution at a temperature of about 200°C is quenched with an additional mixture of N-methylpyrrolidone and water. The ratio of the moles of additional N-methylpyrrolidone to the number of polymer repeating units contained in the quenched solution is about 5, and the ratio of the moles of water therein to polymer repeating units is about 10. The quenched solution is cooled at a rate of 2°C per minute to a final temperature of about 30°C, and the produced particulate poly(phenylene sulfide/sulfone) having improved processing properties is recovered from the remaining liquid solution of N-methylpyrrolidone, water and calcium acetate.

In order to further illustrate the method of the present invention, the following examples are given.

### Example 1

Two samples of poly(phenylene sulfide/sulfone) prepared in the manner disclosed in United States Patent No. 4,127,713 (polymers A and B) were tested for melt flow rate in accordance with ASTM D1238, condition 315/5.0. In accordance with the ASTM test, the treated PPSS is placed in the barrel of a melt flow machine and retained therein at a temperature of 315°C for a time period of about 5 minutes. A 5.0 kilogram weight is then added to the barrel, and the melt flow rate of extruded PPSS is noted in units of grams per 10 minutes.

Polymer A crosslinked in the melt flow machine whereby no extrudate was formed, expelled large quantities of gas and turned very black. Polymer B expelled large quantities of gas after 5 minutes in the melt flow machine, and the extrudate contained a large quantity of bubbles. The melt flow rate was 104 grams per 10 minutes.

### Example 2

75 grams each of polymer A and polymer B (a total of 150 grams) were charged to a two liter stainless steel reactor fitted with a stirrer. Following polymers A and B, 600 cc of N-methylpyrrolidone (NMP), i.e., a ratio of moles of NMP to the number of phenylene sulfide/sulfone (PPSS) repeating units of about 10, were charged to the reactor along with 60 grams of water (a ratio of moles of $H_2O$ to PSS repeating units of about 5.5) and 50 grams of sodium acetate (a ratio of moles of NaOAc to PSS repeating units of about 1.0).

The reactor was sealed and heated to about 200°C with stirring at about 300 RPM. The temperature was maintained for about ½ hour under a sufficient pressure established with nitrogen gas to keep the reactor contents primarily in the liquid phase. The reactor stirring speed was increased to about 500 RPM, and 250 cc of additional NMP (a ratio of moles of NMP to PSS repeating units of about 4.13) and 100 cc of additional water (a ratio of moles of $H_2O$ to PSS repeating units of about 9.2) were charged to the reactor. The heating was terminated, and the reactor was cooled at the rate of about 1°C per minute using air through a cooling coil in the reactor. Opening the reactor revealed granular PPS particles plus a very fine material. The granular PPSS was recovered and separated from the fines using a 100 mesh screen. The granular particles were water washed 5 times at 75°C and dried in a vacuum oven at about 150°C. The fines were recovered by filtration and were also washed and dried in a vacuum oven.

The PPS particles were tested for melt flow rate in the manner described in Example 1, and the extrudate formed was very clear with very few bubbles. The melt flow rate of the treated polymer was 10.05 grams per/10 minutes. The recovered fines were also tested for melt flow rate and the extrudate was very black, expelled large amounts of gas and was very brittle.

## Example 3

The procedure described in Example 2 was repeated except that the cooling phase was carried out at a rate of ½°C per minute and the recovered polymer was water washed four times at 80°C. A melt flow rate test conducted on the particulate treated polymer revealed a very light smooth extrudate containing very few bubbles and a melt flow rate of 10 grams per 10 minutes.

## Example 4

28 lbs. of polymer A and 30.4 lbs of polymer B were charged to a pilot plant reactor along with 28 gallons of N-methylpyrrolidone (a ratio of moles of NMP to PSS repeating units of about 21), 24 lbs. of water (a ratio of moles of $H_2O$ to PSS repeating units of about 5.7) and 20 lbs. of sodium acetate (a ratio of moles of NaOAc to PSS repeating units of about 1.0). The reactor was heated to about 200°C, and the temperature was maintained for 1 hour with continuous stirring. 11.7 gallons of additional N-methylpyrrolidone (a ratio of moles of NMP to PSS repeating units of about 4.17) and 60 lbs. of additional water (a ratio of moles of $H_2O$ to PSS repeating units of about 32) was charged to the reactor. The heating was terminated and the reactor was cooled with stirring at the rate of 2°C per minute to a temperature of about 104°C. Opening the reactor revealed granular PPSS plus very fine PPSS. The PPSS was water washed with cold water, and the fines were separated from the granular polymer during filtration. The granular polymer was hot water washed at 200°C and 172°C and then dried.

A melt flow test conducted on the treated polymer showed that the polymer had a melt flow rate of 14. The extrudate was very smooth and contained very few bubbles.

## Example 5

A sample of poly(phenylene sulfide/sulfone) from a different production run (polymer C) was tested. Untreated polymer C expelled large quantities of gas, was dark colored and exhibited unstable melt flow in a melt flow rate test.

250 grams of polymer C were charged to a 1 gallon stainless steel reactor along with 1300 cc of N-methylpyrrolidone (a ratio of moles of NMP to PSS repeating units of about 13), 80 cc of water (a ratio of moles of $H_2O$ to PSS repeating units of about 5) and 80 grams of calcium acetate (a ratio of moles of $Ca(OAc)_2$ to PSS repeating units of about 0.5). The reactor was heated to 200°C and held for ½ hour with stirring at 300 rpm. The stirrer speed was increased to 500 rpm. The reactor was cooled at a rate of 1°C per minute using air through the reactor coils. Upon opening the reactor, granular PPS particles plus fine material were revealed. The granular polymer was recovered from the reactor mixture using a 200 mesh screen. The granular polymer was water washed 5 times at 80°C and dried in a vacuum oven.

A melt flow rate test in accordance with ASTM D1238 condition 315/5.0 revealed an extrudate of very light color containing a small number of bubbles. The melt flow rate was 14 grams per 10 minutes.

## Example 6

250 grams of polymer C was charged to a 1 gallon stainless steel reactor along with 1300 cc of N-methylpyrrolidone (a ratio of moles of NMP to PSS repeating units of about 13) and 110 cc of water (a ratio of moles of $H_2O$ to PSS repeating units of about 6.4). The reactor was heated to 200°C and held for ½ hour while mixing at a speed of 300 rpm. The reactor mixer speed was increased to 500 rpm, and 150 cc of additional water (a ratio of moles of $H_2O$ to PSS repeating units of about 8.7) and 32 grams of additional calcium acetate (a ratio of moles of $Ca(OAc)_2$ to PSS repeating units of about 0.21) were charged to the reactor. The reactor was cooled at a rate of 1°C per minute to a temperature of about 30°C using air through the reactor coil. The opening of the reactor revealed granular PPSS particles plus fines. The granular material was recovered using a 200 mesh screen and was water washed 5 times at 80°C followed by vacuum oven drying.

A melt flow rate test in accordance with ASTM D1238 condition 315/5.0 revealed an extrudate having a very light color containing a few bubbles.

The present invention, therefore, is well adapted to carry out the objects and attain the ends and advantages mentioned as well as those inherent therein. While numerous changes in this invention may be made by those skilled in the art, such changes are encompassed within the spirit of this invention as defined by the appended claims.

## Claims

1. A method of improving the processing properties of poly(arylene sulfide/sulfone), in particular poly(phenylene sulfide/sulfone) comprising the steps of:

   a) heating a mixture of said poly(arylene sulfide/sulfone) with a polar organic solvent, water and optionally, a metal carboxylate selected from the group consisting of alkali metal carboxylates and alkaline earth metal carboxylates, to a temperature and for a time period such that said poly(arylene sulfide/sulfone) is dissolved;

   b) quenching the resulting solution with additional polar organic solvent, water and a metal carboxylate selected from the group specified in (a), above, if metal carboxylate is not included in step (a), to cause a phase separation of the poly(arylene sulfide/sulfone);

   c) slowly cooling the resultant mixture to solidify the poly(arylene sulfide/sulfone); and

   d) recovering particulate poly(arylene sulfide/sulfone) having improved processing properties.

2. The method of claim 1 wherein said polar organic solvent is an organic amide, in particular wherein said polar organic solvent is N-methylpyrrolidone.

3. The method of claim 1 or 2 wherein said metal carboxylate is a metal acetate, in particular wherein said metal acetate is calcium acetate.

4. The method of claims 1 to 3 wherein said temperature to which said mixture is heated in accordance with step (a) is about 200°C, and wherein said heating at said temperature is for a time period of about 1 hour.

5. The method of one of the preceding claims wherein the ratio in step (a) of the moles of polar organic solvent to the number of arylene sulfide/sulfone repeating units is in the range of from about 25 to about 2, the ratio of the moles of water to the number of arylene sulfide/sulfone repeating units is in the range of from about 10 to about 1, and the ratio of the moles of metal carboxylate, if present, to the number of arylene sulfide/sulfone repeating units is in the range of from about 0.10 to about 5.

6. The method of one of the preceding claims wherein the ratio in step (b) of the moles of polar organic solvent to the number of arylene sulfide/sulfone repeating units is in the range of from about 25 to about 2, the ratio of the moles of water to the number of arylene sulfide/sulfone repeating units is in the range of from about 10 to about 1, and the ratio of the moles of metal carboxylate, if present, to the number of arylene sulfide/sulfone repeating units is in the range of from about 0.05 to about 5.

7. The method of one of the preceding claims wherein the cooling of step (c) is at the rate of about 2°C per minute to a temperature in the range of from about 200°C to about 20°C.

8. A method of improving the processing properties of poly(phenylene sulfide/sulfone) comprising the steps of:

   a) heating a mixture of said poly(phenylene sulfide/sulfone) with N-methylpyrrolidone, water and optionally, a metal carboxylate selected from the group consisting of alkali metal carboxylates and alkaline earth metal carboxylates, to a temperature of about 200°C for a time period of about 1 hour whereby said poly(phenylene sulfide/sulfone) is dissolved;

   b) quenching the resulting solution with additional N-methylpyrrolidone, water and a metal carboxylate selected from the group specified in (a), above, if metal carboxylate is not included in step (a), to cause a phase separation of the poly(phenylene sulfide/sulfone);

   c) slowly cooling the resultant mixture to a temperature in the range of from about 200°C to about 20°C to solidify said poly(phenylene sulfide/sulfone), in particular cooling at the rate of about 2°C per minute, and

   d) recovering particulate poly(phenylene sulfide/sulfone) having improved processing properties.

9. The method of claim 8 wherein said metal carboxylate is a metal acetate, in particular wherein said metal acetate is calcium acetate.

10. The method of claim 9 wherein the ratio in step (a) of the moles of N-methylpyrrolidone to the number of phenylene sulfide/sulfone repeating units is about 10, the ratio of the moles of water to the number of phenylene sulfide/sulfone repeating units is about 10, and the ratio of the moles of calcium acetate, if present, to the number of phenylene sulfide/sulfone repeating units is about 1.0.

11. The method of claim 10 wherein the ratio in step (b) of the moles of N-methylpyrrolidone to the number of phenylene sulfide/sulfone repeating units is about 13, the ratio of the moles of water to the number of phenylene sulfide/sulfone repeating units is about 5, and the ratio of the moles of calcium acetate, if present, to the number of phenylene sulfide/sulfone repeating units is about 0.5.

12. The method of claims 8 to 11 wherein the recovering of particulate poly(phenylene sulfide/sulfone) of step (d) comprises filter separating said particulate poly(phenylene sulfide/sulfone).

13. The method of claims 8 to 11 wherein the separated poly(phenylene sulfide/sulfone) is washed with cold water followed by hot water washing and wherein said calcium acetate is included in step (a).